# EUROPEAN PATENT SPECIFICATION

(11) **EP 2 317 874 B1**
(45) Date of publication and mention of the grant of the patent: **24.04.2013**
(21) Application number: 09791263.8
(22) Date of filing: 07.08.2009
(51) Int. Cl.: A23L 1/0534, A23L 1/221, A23L 1/222, A23L 2/52

(54) **FLAVOR OIL EMULSIONS**
AROMAÖLEMULSIONEN
ÉMULSIONS D'HUILE AROMATISANTE

(30) Priority: 07.08.2008 US 86926 P
(43) Date of publication of application: 11.05.2011
(73) Proprietor: Dow Global Technologies LLC, Midland, MI 48674 (US)
(72) Inventor: ZHANG, Xiaodong, Livingston NJ 07039 (US); KUNTSEVICH, Marina, East Brunswick NJ 08816 (US); KELLER, John, D. JR., Freehold NJ 07728 (US)
(74) Representative: Raynor, John
(86) International application number: PCT/US2009/053079
(87) International publication number: WO 2010/017435

(56) References cited:
- DE-A1-102006 019 241
- US-A- 2 906 626
- US-A- 4 084 012
- US-A- 5 374 444
- US-A- 5 700 397
- MIRHOSSEINI ET AL: "Influence of pectin and CMC on physical stability, turbidity loss rate, cloudiness and flavor release of orange beverage emulsion during storage" 20 February 2008 (2008-02-20), CARBOHYDRATE POLYMERS, APPLIED SCIENCE PUBLISHERS, LTD. BARKING, GB, PAGE(S) 83 - 91 , XP022542252 ISSN: 0144-8617 *paragraphs: 1, 2.2, 3.1-3.3) *
- THE DOW CHEMICAL COMPANY: "Technical Handbook METHOCEL Cellulose Ethers"[Online] September 2002 (2002-09), pages 1-29, XP002550462 Retrieved from the Internet: URL:http://www.dow.com/PublishedLiterature /dh_004f/0901b8038004fa1b.pdf?filepath=met hocel/pdfs/noreg/192-01062.pdf&fromPage=Ge tDoc> [retrieved on 2009-10-14]
- ANONYMOUS/ THE DOW CHEMICAL COMPANY: "Chemistry of Methocel Cellulose Ethers"[Online] 13 March 2008 (2008-03-13), pages 1-2, XP002550463 Retrieved from the Internet: URL:http://web.archive.org/web/20080313164 750/http://www.dow.com/dowexcipients/produ cts/chemistry/methocel.htm> [retrieved on 2009-10-14]
- SARKAR ET AL.: "Thermal Gelation Properties of Methyl and Hydroxypropyl Methylcellulose" JOURNAL OF APPLIED POLYMER SCIENCE, vol. 24, 1979, pages 1073-1087, XP002550464

## Description

### Field

The present application relates to beverage processing and formulations.

### Background

Many beverages, including carbonated soft drinks, non-carbonated fruit drinks, sport drinks, and juices, incorporate a flavor oil to lend flavor, and in some cases, appearance properties, to the beverage. Typically, the beverage is formed by combining a larger aqueous fraction with an emulsion concentrate that contains the flavor oil. In addition to the flavor oil, the emulsion concentrate usually contains water, preservatives, acidulants, weight agents, and stabilizers (hydrocolloids) to keep the emulsion uniform over time. It is very important that the stabilizer prevents separation both of the emulsion and, after dilution, the final beverage. Not all stabilizers work equally well, however, because the stabilizer must be effective both at the low pH conditions of the emulsion and the relatively higher pH conditions of the beverage. Moreover, the stabilizer must be safe for consumption.

Over the years, gum Arabic has been a preferred stabilizer in the industry. However, gum Arabic suffers from several disadvantages, including volatile supply. Gum Arabic is derived from acacia trees in the so-called "gum belt" African countries, like Chad, Sudan, Niger, and Senegal, which have experienced drought and civil unrest. Thus, what is needed is a stabilizer for a flavor oil emulsion that has comparable performance to gum Arabic.

US 2,906,626 relates to edible oil emulsions and describes a process wherein a hydroxypropyl methyl cellulose is first wetted with the edible oil to be emulsified and the wetted cellulose ether emulsified by the agitated addition thereto of a water-propylene glycol medium.

US 4,084,012 discloses aqueous edible oil emulsions obtained by using about 1-20 wt.% of certain water-soluble, hydroxyl-propylmethyl cellulose ethers as the emulsion stabilizer.

MIRHOSSEINI et al, "Influence of pectin and CMC on physical stability, turbidity loss rate, cloudiness and flavor release of orange beverage emulsion during storage", Carbohydrate Polymers, February 2008, pages 83-91, investigates the use of pectin and carboxymethylcellulose (CMC) as replacers for Arabic gum and xanthum gum by determining the changes in physical properties and flavor release profile of beverage emulsions during six months storage.

DE 10 2006 019241 A1 relates to use of a protein or polysaccharide containing oil such as liquid fat-in-water emulsion with high water bonding for the preparation of foodstuffs, preferably drinks, with a creamy consistency without oil fat droplet aggregation, and with a creamy taste sensation.

### Summary

The present invention provides
a flavor oil emulsion, comprising:
at least one flavor oil present in an amount from 1% to 30% by weight of the emulsion forming composition; and
a water soluble cellulose ether present in an amount from 0.5% to 10% by weight of the emulsion forming composition;
wherein the water soluble cellulose ether is methyl cellulose; and
wherein the water soluble cellulose ether is selected from those with a Brookfield viscosity of less than 4000 cps (4000 mPa.s) for a 2% solution in water at 25°C.

The present invention also provides use of the flavor oil emulsion in the manufacture of a beverage.

### Description

The present invention provides a flavor oil emulsion, comprising: at least one flavor oil present in an amount from 1% to 30% by weight of the emulsion forming composition; and
a water soluble cellulose ether present in an amount from 0.5% to 10% by weight of the emulsion forming composition;
wherein the water soluble cellulose ether is methyl cellulose; and
wherein the water soluble cellulose ether is selected from those with a Brookfield viscosity of less than 4000 cps (4000 mPa.s) for a 2% solution in water at 25°C.

The present invention also provides use of the flavor oil emulsion in the manufacture of a beverage.

A "stable emulsion" is one that does not separate, i.e., no water can be observed collecting below, nor oil forming on the top, of the emulsion. Not all water soluble cellulose ethers form a stable emulsion, and ones that do not are not intended to be covered by the appended claims. In one embodiment, the emulsion remains stable for at least 30 days, preferably at least 60 days, more preferably at least 90 days, most preferably at least 120 days.

Although it is not a critical feature, as there are emulsions which experience even extreme viscosity drops but remain stable, in one embodiment, the emulsion experiences a decrease in viscosity of less than 5% percent over at least 120 days, preferably less than 2 %, more preferably less than 1%.

The water soluble cellulose ether is methyl cellulose. The water soluble cellulose ether is selected from those with a Brookfield viscosity of less than 4000 cps (mPa. s) for a 2% solution in water at 25°C, preferably less than 1000 cps (mPa.s). In a preferred embodiment, the water soluble cellulose ether is selected from those with a Brookfield viscosity of preferably less than 150 cps (150 mPa.s), preferably less than 100 cps (100 mPa.s), more preferably less than 25 cps (25 mPa.s).

In one embodiment, the water soluble cellulose ether is publicly available from The Dow Chemical Company under the tradename METHOCEL A15 FG. In one embodiment, the water soluble cellulose ether is publicly available from The Dow Chemical Company under the tradename METHOCEL SGA 7C FG. In one embodiment, the water soluble cellulose ether is publicly available from The Dow Chemical Company under the tradename METHOCEL SGA 150 FG.

The water soluble cellulose ether is present in an amount from 0.5% to 10%, more preferably in an amount from 1% to 7%.

The flavor oil may be any consumable hydrophobic component that affords a taste, an odor, or both. In one embodiment, the flavor oil is selected from the group consisting of citrus oils, nut oils, coffee oils, cola oils, mint oils, including spearmint, wintergreen, and peppermint, and spice oils, including vanilla, almond, cinnamon, clove, and bay, or blends thereof. In one embodiment, the flavor oil is obtained from citrus peel. The flavor oil is present in an amount from 1% to 30% by weight of the emulsion forming composition, preferably in an amount from 5% to 15%, more preferably in an amount from 11% to 13%.

The flavor oil emulsion may comprise additional conventional ingredients, such as water, preservatives, acidulants, or weighing agents. Examples of preservatives include sodium benzoate, sulfites, sulfur dioxide, nitrite and nitrate salts, sorbic acid, natamycin, glyceryl esters, propioic acid, and diethyl pyrocarbonate. Examples of acidulants include citric acid, lactic acid, malic acid, adipic acid, benzoic acid, fumaric acid, propionic acid, succinic acid, tartaric acid, phosphoric acid, and carbonic acid. In one embodiment, the weighing agent is at least one of a brominated vegetable oil, an ester gum, sucrose diacetate hexa-isoburtyurate, a refined gum dammar, a ganuaba wax, benzyl benzoate, a polyglyceryl ester, or a glyceryl tribenzoate. The amount of optional ingredients effective for achieving the desired property provided by such ingredients can be readily determined by one skilled in the art.

Flavor oil emulsions of the present invention can be produced by conventional emulsion-forming methods.

Gum Arabic at fairly high concentrations (20% or more) is a preferred stabilizer for conventional emulsions because of its surface active properties (from natural protein content) and good acid stability. In one embodiment, the present invention provides an at least partial replacement for gum Arabic in emulsions. Thus in one embodiment, the flavor oil emulsion contains less than 10% gum Arabic, preferably less than 7%, preferably less than 5%, preferably less than 3%, preferably less than 1%, more preferably less than 0.1%, most preferably less than 0.0001%.

The flavor oil emulsions of the present invention can be combined with a larger aqueous fraction to form a beverage, for example, a carbonated soft drink, a non-carbonated fruit drink, a citrus flavored beverage, a sport drink, or a juice, provided that the beverage processing temperature is less than the thermogelation temperature of the water soluble cellulose ether. Thus, in one embodiment, the beverage is processed at ambient temperature.

Flavor oils help achieve turbidity in the finished beverage, giving natural fruit juice image or appearance. Cloudiness arises from the fine dispersion of essential oil droplets throughout the aqueous phase of the finished beverage. However, due to an incompatibility in specific gravity between flavoring oils (<0.9 g/ml) and finished aqueous beverage (> 1.00 g/ml) stability problems can occur such as separation, evidenced by an fatty ringing effect around the neck of the container or clear liquid at the bottom of the container. It is desirable that the beverage not exhibit any separation. In one embodiment, the beverage remains stable for at least 200 days.

### Examples

For reference, the water soluble cellulose ethers have approximately the Brookfield viscosities for a 2% solution in water at 25°C described in Table 1.

**TABLE 1**

| | **Viscosity (cps (mPa.s))** |
|---|---|
| METHOCEL A15 FG cellulose ether | 15 |
| METHOCEL SGA150 FG cellulose ether | 150 |
| METHOCEL A4C FG cellulose ether | 400 |
| METHOCEL SGA7C FG cellulose ether | 700 |
| METHOCEL A15C FG cellulose ether | 1500 |
| METHOCEL A4M FG cellulose ether | 4000 |
| METHOCEL SGA16M FG cellulose ether | 16000 |
| METHOCEL SGA50M FG cellulose ether | 50000 |

### Example 1

Exemplary flavor oil emulsions according to the present invention contain the components recited in TABLES 1A and 1B.

**TABLE 1A**

| | **Batch 1*** | **Batch 2*** | **Batch 3** | **Batch 4** | **Batch 5*** |
|---|---|---|---|---|---|
| METHOCEL E5 FG cellulose ether | 7 | -- | -- | -- | -- |
| METHOCEL F50 FG cellulose ether | -- | 2.75 | -- | -- | -- |
| METHOCEL A15 FG cellulose ether | -- | -- | 4.25 | -- | -- |
| METHOCEL SG A150 FG cellulose ether | -- | -- | -- | 1.8 | -- |
| METHOCEL K3 PREMIUM cellulose ether | -- | -- | -- | -- | 7 |
| Orange Oil | 12 | 12 | 12 | 12 | 12 |
| Ester Gum | 5 | 5 | 5 | 5 | 5 |
| Citric Acid | 0.15 | 0.15 | 0.15 | 0.15 | 0.15 |
| Sodium Benzoate | 0.02 | 0.02 | 0.02 | 0.02 | 0.02 |
| Water | QC | QC | QC | QC | QC |

| | | | | | |
|---|---|---|---|---|---|
| * Comparative | | | | | |

**TABLE 1B**

| | **Batch 6*** | **Batch 7*** | **Batch 8** | **Batch 9** | **Batch 10*** |
|---|---|---|---|---|---|
| METHOCEL E5 FG cellulose ether | 4.5 | -- | -- | -- | -- |
| METHOCEL F50 FG cellulose ether | -- | 1.5 | -- | -- | -- |
| METHOCEL A15 FG cellulose ether | -- | -- | 2.75 | -- | -- |
| METHOCEL SG A150 FG cellulose ether | -- | -- | -- | 0.8 | -- |
| METHOCEL K3 PREMIUM cellulose ether | -- | -- | -- | -- | 5 |
| Orange Oil | 8 | 8 | 8 | 8 | 8 |
| Ester Gum | 5 | 5 | 5 | 5 | 5 |
| Citric Acid | 0.15 | 0.15 | 0.15 | 0.15 | 0.15 |
| Sodium Benzoate | 0.02 | 0.02 | 0.02 | 0.02 | 0.02 |
| Water | QC | QC | QC | QC | QC |

| | | | | | |
|---|---|---|---|---|---|
| * Comparative | | | | | |

Units for Tables 1A and 1B are weight percent. Amounts of cellulose ethers in Table 1A (with 12% flavor oil) are selected to have a target formulation viscosity of 250-450 cps (250-450 mPa.s). Amounts of cellulose ethers in Table 1B (with 8% flavor oil) are selected to have a target formulation viscosity of 25-80 cps (25-80 mPa.s).

To formulate, the ester gum is dissolved in the orange oil. Separately, the citric acid, sodium benzoate, and cellulose ether are dry blended. This dry blend is then added to the oil, and mixed to form a uniform slurry. Water (65°F (16°C)) is added to the slurry, mixing for about 3 min @1200rpm with a Silverson mixer to form a pre-emulsion. The pre-emulsion is then homogenized using a MICROFLUIDICS homogenizer @3000psi (21 MPa).

### Example 2

Exemplary flavor oil emulsions according to the present invention contain the components recited in TABLES 2A & 2B.

**TABLE 2A**

| | **Batch 11** | **Batch 12** | **Batch 13** | **Batch 14*** |
|---|---|---|---|---|
| METHOCEL A15 cellulose ether | 3 | -- | -- | -- |
| METHOCEL A4C cellulose ether | -- | 1 | -- | -- |
| METHOCEL A15C cellulose ether | -- | -- | 0.8 | -- |
| METHOCEL A4M cellulose ether | -- | -- | -- | 0.6 |
| Orange Oil | 12 | 12 | 12 | 12 |
| Ester Gum | 5 | 5 | 5 | 5 |
| Citric Acid | 0.15 | 0.15 | 0.15 | 0.15 |
| Sodium Benzoate | 0.02 | 0.02 | 0.02 | 0.02 |
| Water | QC | QC | QC | QC |

| | | | | |
|---|---|---|---|---|
| * Comparative | | | | |

**TABLE 2B**

| | **Batch 15** | **Batch 16** | **Batch 17*** | **Batch 18*** | **Batch 19** |
|---|---|---|---|---|---|
| METHOCEL A15 cellulose ether | -- | -- | -- | -- | 1.5 |
| METHOCEL SGA 150 cellulose ether | 1.05 | -- | -- | -- | 0.5 |
| METHOCEL SGA 7C cellulose ether | -- | 0.875 | -- | -- | -- |
| METHOCEL SGA 16M cellulose ether | -- | -- | 0.6 | -- | -- |
| METHOCEL SGA 50M cellulose ether | -- | -- | -- | 0.5 | -- |
| Orange Oil | 12 | 12 | 12 | 12 | 12 |
| Ester Gum | 5 | 5 | 5 | 5 | 5 |
| Citric Acid | 0.15 | 0.15 | 0.15 | 0.15 | 0.15 |
| Sodium Benzoate | 0.02 | 0.02 | 0.02 | 0.02 | 0.02 |
| Water | QC | QC | QC | QC | QC |

| | | | | | |
|---|---|---|---|---|---|
| * Comparative | | | | | |

The batches may be prepared according to the protocol described in Example 1.

### Example 3 (Comparative)

Comparative compositions contain the components recited in TABLE 3.

**TABLE 3**

| | **Comparative Batch A** | **Comparative Batch B** |
|---|---|---|
| Gum Arabic | 20 | 15 |
| Orange Oil | 12 | 8 |
| Ester Gum | 5 | 5 |
| Citric Acid | 0.15 | 0.15 |
| Sodium Benzoate | 0.02 | 0.02 |
| Water | QC | QC |

Amounts of gum Arabic in Batch A and B are selected to have a target formulation viscosity of 250-450 cps (250-450 mPa.s), and 25-80 cps (25-80 mPa.s), respectively. As above, to formulate, the ester gum is dissolved in the orange oil. Separately, the citric acid, sodium benzoate, and gum Arabic are dry blended. This dry blend is then added to the oil, and mixed to form a uniform slurry. Water (65°F (16°C)) is added to the slurry, mixing for about 3 min @1200rpm with a Silverson mixer to form a pre-emulsion. The pre-emulsion is then homogenized using a MICROFLUIDICS homogenizer @3000psi (21MPa).

### Example 4

Emulsions made substantially according to the protocols described above in Examples 1 and 3 were made and are recited in TABLE 4.

**TABLE 4**

| | **Initial Emulsion Viscosity** | **120 day Emulsion Viscosity** | **Viscosity loss %** | **120 day pH** | **120 day Separation** |
|---|---|---|---|---|---|
| Batch 1* | 303 | 193 | 36 | 3.2 | Significant |
| Batch 6* | 43 | 36 | 16 | 3.15 | Significant |
| Batch 2* | 324 | 96 | 70 | 3.18 | Significant |
| Batch 7* | 45 | 26 | 42 | 3.09 | Significant |
| Batch 3 | 424 | 403 | 5 | 3.27 | Slight |
| Batch 8 | 75.5 | 50 | 34 | 3.27 | Slight |
| Batch 4 | 690 | 204 | 70 | 3.16 | Slight |
| Batch 9 | 27.5 | 16 | 42 | 3.15 | Slight |
| Batch 5* | 164 | 147 | 10 | 3.43 | None |
| Batch 10* | 30 | 36 | N/A | 3.24 | None |
| Comp. Batch A* | 250 | 319 | N/A | 4.19 | Slight |
| Comp. Batch B* | 60 | 72 | N/A | 4.13 | None |

| | | | | | |
|---|---|---|---|---|---|
| *Comparative | | | | | |

All emulsions were initially stable. After post-homogenization viscosity of emulsion was determined, the emulsions were transferred to glass jars, and stored on the bench top @ room temperature (~ 70 °F (~21°C)). After 4 months, final viscosity was determined as well as visible observation of separation.

### Example 5

Emulsions made substantially according to the protocols described above in Examples 2 and 3 were made and are recited in TABLE 5.

**TABLE 5**

| | **Initial Emulsion Viscosity** | **30 day Emulsion Viscosity** | **Viscosity loss %** | **30 day Separation** |
|---|---|---|---|---|
| Batch 11 | 240 | 275 | N/A | None |
| Batch 12 | 198 | 120 | 39.39 | Significant |
| Batch 13 | 188 | 114 | 39.36 | Significant |
| Batch 14* | 142 | 64 | 54.93 | Significant |
| Batch 15 | 204 | 218 | N/A | None |
| Batch 16 | 185 | 103 | 44.32 | None |
| Batch 17* | 174 | 27 | 84.48 | Slight |
| Batch 18* | 185 | 24 | 87.03 | Significant |
| Batch 19 | 230 | Not determined | Not determined | None |
| Comparative Batch A* | 270 | 367 | N/A | None |

| | | | | |
|---|---|---|---|---|
| * Comparative | | | | |

All emulsions were initially stable. After post-homogenization viscosity of emulsion was determined, the emulsions were transferred to glass jars, and stored on the bench top @ room temperature (- 70 °F (~21°C.)). After 1 month, 30 day viscosity was determined as well as visible observation of separation.

Batch 11 (containing low viscosity METHOCEL A15) provided excellent emulsion stability. As the viscosity of the METHOCEL cellulose used increases (Grades 4C, 15C and 4M), the corresponding emulsion batches (12, 13 and 14) are not stable after 30 days.

Batches 15 and 16 (containing METHOCEL SGA150 and SGA7C) provided good emulsion stability. As the viscosity of the METHOCEL cellulose used increases (Grades SGA16M and SGA50M), the corresponding emulsion batches (17 and 18) are not stable after 30 days.

Batch 19 contains a blend of METHOCEL A15 and METHOCEL SGA150 and shows excellent stability in 30 days.

Comparative Batch A containing Gum Arabic also shows good emulsion stability.

### Example 6

Beverages according to the present invention and comparative examples contain the components recited in TABLE 6.

**TABLE 6**

| | **Bev. 1*** | **Bev. 2*** | **Bev. 3** | **Bev. 4** | **Bev. 5*** | **Comparative Bev. A*** |
|---|---|---|---|---|---|---|
| Water | 80 | 80 | 80 | 80 | 80 | 80 |
| Sucrose | 19.65 | 19.65 | 19.65 | 19.65 | 19.65 | 19.65 |
| Citric Acid | 0.15 | 0.15 | 0.15 | 0.15 | 0.15 | 0.15 |
| Sodium Benzoate | 0.1 | 0.1 | 0.1 | 0.1 | 0.1 | 0.1 |
| Emulsion | 0.1 of Batch 1* | 0.1 of Batch 2* | 0.1 of Batch 3 | 0.1 of Batch 4 | 0.1 of Batch 5* | 0.1 of Batch A* |

| | | | | | | |
|---|---|---|---|---|---|---|
| * Comparative | | | | | | |

All components except the emulsion are combined at ambient temperature. The emulsion is then added and mixed for about 1 minute with a tablespoon or the like.

### Example 7

Beverages according to the present invention and a comparative example contain the components recited in TABLE 7.

**TABLE 7**

| | **Bev. 6** | **Bev. 7** | **Bev. 8** | **Bev. 9*** | **Bev. 10** | **Bev. 11** | **Bev. 12*** | **Bev. 13*** | **Bev. 14** |
|---|---|---|---|---|---|---|---|---|---|
| Water | 80 | 80 | 80 | 80 | 80 | 80 | 80 | 80 | 80 |
| Sucrose | 19.65 | 19.65 | 19.65 | 19.65 | 19.65 | 19.65 | 19.65 | 19.65 | 19.65 |
| Citric Acid | 0.15 | 0.15 | 0.15 | 0.15 | 0.15 | 0.15 | 0.15 | 0.15 | 0.15 |
| Sodium Benzoate | 0.1 | 0.1 | 0.1 | 0.1 | 0.1 | 0.1 | 0.1 | 0.1 | 0.1 |
| Emulsion | 0.1 of Batch 11 | 0.1 of Batch 12 | 0.1 of Batch 13 | 0.1 of Batch 14* | 0.1 of Batch 15 | 0.1 of Batch 16 | 0.1 of Batch 17* | 0.1 of Batch 18* | 0.1 of Batch 19 |

| | | | | | | | | | |
|---|---|---|---|---|---|---|---|---|---|
| * Comparative | | | | | | | | | |

The beverages may be prepared according to the protocol described in Example 6.

### Example 8

Beverages made substantially according to the protocols described above in Example 6 were made and are recited in TABLE 8.

**TABLE 8**

| | **Initial Haze** | **7 Month Haze** | **7 Month Turbidity** | **Visually Acceptable Clouding Effect** |
|---|---|---|---|---|
| Bev. 1* | 90.33 | 21.46 | 41.25 | No |
| Bev. 2* | 91.17 | 73.31 | 267.22 | Yes |
| Bev. 3 | 91.09 | 71.55 | 251.37 | Yes |
| Bev. 4 | 90.87 | 54.39 | 147.59 | Yes |
| Bev. 5* | 87.20 | 40.04 | 89.69 | No |
| Comparative Bev. A* | 91.35 | 64.37 | 196.44 | Yes |

| | | | | |
|---|---|---|---|---|
| * Comparative | | | | |

Beverages were prepared using flavor emulsions within a week of making. The ability of beverages to retain proper clouding effect over time was assessed by measuring turbidity (% Haze and/or mg/L solids) using a Nippon Senshoku COH-300A Color-Oil-Haze measuring device. Samples were loaded into an 80 ml sample cell and light transmittance/scattering was determined against a blank cell measurement. Although the Methocel K3 containing flavor emulsions showed good stability after 7 months, the corresponding beverage (Beverage 5 (comparative)) had significant reduction in opacity of the formulations and is not acceptable. On the other hand, Methocel A15, Methocel SGA 150 and Gum Arabic provide acceptable stability for the flavor emulsions (batch 3, 4 and comparative batch A) and acceptable clouding effect (beverage 3, 4 and comparative beverage A).

### Example 9

Beverages made substantially according to the protocols described above in Example 7 were made and are recited in TABLE 9.

**TABLE 9**

| | **Initial Haze** | **Haze after 30 days storage** | **Stability after 30 days storage** |
|---|---|---|---|
| Bev. 6 | 87.76 | 70.46 | Yes |
| Bev. 7 | 91.04 | 87.18 | No |
| Bev. 8 | 91.26 | 87.65 | No |
| Bev. 9* | 90.69 | 84.42 | No |
| Bev. 10 | 91.11 | 87.21 | Yes |
| Bev. 11 | 91.27 | 87.36 | Yes |
| Bev. 12* | 91.29 | 87.79 | No |
| Bev. 13* | 91.25 | 88.61 | No |
| Bev. 14 | 91.38 | -- | Yes |
| Comparative Bev. A* | 91.2 | 88.21 | Yes |

| | | | |
|---|---|---|---|
| * Comparative | | | |

Beverages were prepared using flavor emulsions within a week of making. The initial haze, haze after 30 days, beverage stability, and visually acceptable opacity were determined for these batches. All beverage samples have acceptable visual clouding effect after one month of storage. Cloudiness is likely to be related to droplet coalescence, but not fully correlated with beverage stability. Beverage stability appeared to follow emulsion stability.

## Claims

1. A flavor oil emulsion, comprising:
at least one flavor oil present in an amount from 1% to 30% by weight of the emulsion forming composition; and
a water soluble cellulose ether present in an amount from 0.5% to 10% by weight of the emulsion forming composition;
wherein the water soluble cellulose ether is methyl cellulose; and
wherein the water soluble cellulose ether is selected from those with a Brookfield viscosity of less than 4000 cps (4000 mPa·s) for a 2% solution in water at 25°C.

2. The flavor oil emulsion of claim 1, wherein the water soluble cellulose ether is selected from those with a Brookfield viscosity of less than 1000 cps (1000 mPa·s) for a 2% solution in water at 25°C.

3. The flavor oil emulsion of claim 1, wherein the water soluble cellulose ether is selected from those with a Brookfield viscosity of less than 150 cps (150 mPa·s) for a 2% solution in water at 25°C.

4. The flavor oil emulsion of claim 1, wherein the flavor oil is selected from the group consisting of citrus oils, coffee oils, cola oils, mint oils, including spearmint, wintergreen, and peppermint, and spice oils, including vanilla, almond, cinnamon, clove, and bay, or blends thereof.

5. The flavor oil emulsion of claim 1, wherein the water soluble cellulose ether is present in an amount from 1% to 7%.

6. The flavor oil emulsion of claim 1, further comprising at least one of water, preservatives, acidulants, or weighing agents.

7. The flavor oil emulsion of claim 6, wherein the weighing agent is at least one of a brominated vegetable oil, an ester gum, sucrose diacetate hexa-isobutyrate, a refined gum dammar, a ganuaba wax, benzyl benzoate, a polyglyceryl ester, or a glyceryl tribenzoate.

8. The flavor oil emulsion of claim 1, provided that the flavor oil emulsion contains less than 10% gum Arabic.

9. The flavor oil emulsion of claim 8, provided that the flavor oil emulsion contains less than 7% gum Arabic.

10. The use of a flavor oil emulsion of claim 1 in the manufacture of a beverage.

11. The use of claim 10, wherein the beverage is processed at ambient temperature.

12. The use of claim 10, wherein the beverage is a carbonated beverage.

13. The use of claim 10, wherein the beverage is not a carbonated beverage.

14. The use of claim 10, wherein the beverage is a citrus flavored beverage.

## Patentansprüche

1. Eine Aromaölemulsion, beinhaltend:
mindestens ein Aromaöl, das in einer Menge von 1 Gew.-% bis 30 Gew.-% der emulsionsbildenden Zusammensetzung vorliegt; und
ein wasserlöslicher Celluloseether, der in einer Menge von 0,5 Gew.-% bis 10 Gew.-% der emulsionsbildenden Zusammensetzung vorliegt;
wobei der wasserlösliche Celluloseether Methylcellulose ist; und
wobei der wasserlösliche Celluloseether ausgewählt ist aus jenen mit einer Brookfield-Viskosität von weniger als 4000 cps (4000 mPa·s) für eine 2%-ige Lösung in Wasser bei 25 °C.

2. Aromaölemulsion gemäß Anspruch 1, wobei der wasserlösliche Celluloseether ausgewählt ist aus jenen mit einer Brookfield-Viskosität von weniger als 1000 cps (1000 mPa·s) für eine 2%-ige Lösung in Wasser bei 25 °C.

3. Aromaölemulsion gemäß Anspruch 1, wobei der wasserlösliche Celluloseether ausgewählt ist aus jenen mit einer Brookfield-Viskosität von weniger als 150 cps (150 mPa·s) für eine 2%-ige Lösung in Wasser bei 25 °C.

4. Aromaölemulsion gemäß Anspruch 1, wobei das Aromaöl ausgewählt ist aus der Gruppe bestehend aus Zitrusölen, Kaffeeölen, Kolaölen, Minzölen, einschließlich Grüner Minze, Wintergrün und Pfefferminze, und Gewürzölen, einschließlich Vanille, Mandel, Zimt, Nelke und Lorbeer, oder Mischungen davon.

5. Aromaölemulsion gemäß Anspruch 1, wobei der wasserlösliche Celluloseether in einer Menge von 1 % bis 7 % vorliegt.

6. Aromaölemulsion gemäß Anspruch 1, die ferner mindestens entweder Wasser, Konservierungsstoffe, Säuerungsmittel und/oder Beschwerungsmittel beinhaltet.

7. Aromaölemulsion gemäß Anspruch 6, wobei das Beschwerungsmittel mindestens entweder bromiertes Pflanzenöl, ein Estergummi, Saccharosediacetathexaisobutyrat, ein raffinierter Gummi Dammar, ein Ganuaba-Wachs, Benzylbenzoat, ein Polyglycerylester und/oder ein Glyceryltribenzoat ist.

8. Aromaölemulsion gemäß Anspruch 1, vorausgesetzt, dass die Aromaölemulsion weniger als 10 % Gummi arabicum enthält.

9. Aromaölemulsion gemäß Anspruch 8, vorausgesetzt, dass die Aromaölemulsion weniger als 7 % Gummi arabicum enthält.

10. Die Verwendung einer Aromaölemulsion gemäß Anspruch 1 bei der Herstellung eines Getränkes.

11. Verwendung gemäß Anspruch 10, wobei das Getränk bei Raumtemperatur verarbeitet wird.

12. Verwendung gemäß Anspruch 10, wobei das Getränk ein kohlensäurehaltiges Getränk ist.

13. Verwendung gemäß Anspruch 10, wobei das Getränk kein kohlensäurehaltiges Getränk ist.

14. Verwendung gemäß Anspruch 10, wobei das Getränk ein Getränk mit Zitrusaroma ist.

## Revendications

1. Une émulsion d'huile aromatisante, comprenant :
au moins une huile aromatisante présente dans une quantité allant de 1 % à 30 % en poids de la composition formant l'émulsion ; et
un éther de cellulose soluble dans l'eau présent dans une quantité allant de 0,5 % à 10 % en poids de la composition formant l'émulsion ;
dans laquelle l'éther de cellulose soluble dans l'eau est de la méthyl cellulose ; et
dans laquelle l'éther de cellulose soluble dans l'eau est sélectionné parmi ceux ayant une viscosité Brookfield inférieure à 4 000 cps (4 000 mPa·s) pour une solution à 2 % dans de l'eau à 25 °C.

2. L'émulsion d'huile aromatisante de la revendication 1, dans laquelle l'éther de cellulose soluble dans l'eau est sélectionné parmi ceux ayant une viscosité Brookfield inférieure à 1 000 cps (1 000 mPa·s) pour une solution à 2 % dans de l'eau à 25 °C.

3. L'émulsion d'huile aromatisante de la revendication 1, dans laquelle l'éther de cellulose soluble dans l'eau est sélectionné parmi ceux ayant une viscosité Brookfield inférieure à 150 cps (150 mPa·s) pour une solution à 2 % dans de l'eau à 25 °C.

4. L'émulsion d'huile aromatisante de la revendication 1, dans laquelle l'huile aromatisante est sélectionnée dans le groupe consistant en huiles d'agrumes, huiles de café, huiles de cola, huiles de menthe, y compris menthe verte, wintergreen et menthe poivrée, et huiles d'épices, y compris vanille, amande, cannelle, clou de girofle, et laurier, ou des mélanges homogènes de celles-ci.

5. L'émulsion d'huile aromatisante de la revendication 1, dans laquelle l'éther de cellulose soluble dans l'eau est présent dans une quantité allant de 1 % à 7 %.

6. L'émulsion d'huile aromatisante de la revendication 1, comprenant en outre au moins soit de l'eau, soit des conservateurs, soit des acidulants, soit des agents de lestage.

7. L'émulsion d'huile aromatisante de la revendication 6, dans laquelle l'agent de lestage est au moins un élément parmi une huile végétale bromée, une gomme ester, du diacétate hexa-isobutyrate de saccharose, une gomme dammar raffinée, une cire de ganuaba, du benzoate de benzyle, un ester de polyglycéryle, ou un tribenzoate de glycéryle.

8. L'émulsion d'huile aromatisante de la revendication 1, à condition que l'émulsion d'huile aromatisante contienne moins de 10 % de gomme arabique.

9. L'émulsion d'huile aromatisante de la revendication 8, à condition que l'émulsion d'huile aromatisante contienne moins de 7 % de gomme arabique.

10. L'utilisation d'une émulsion d'huile aromatisante de la revendication 1 dans la fabrication d'une boisson.

11. L'utilisation de la revendication 10, dans laquelle la boisson est élaborée à température ambiante.

12. L'utilisation de la revendication 10, dans laquelle la boisson est une boisson gazeuse.

13. L'utilisation de la revendication 10, dans laquelle la boisson n'est pas une boisson gazeuse.

14. L'utilisation de la revendication 10, dans laquelle la boisson est une boisson aromatisée aux agrumes.
